# EUROPEAN PATENT SPECIFICATION

(11) **EP 2 864 532 B1**
(45) Date of publication and mention of the grant of the patent: **01.02.2017**
(21) Application number: 13756686.5
(22) Date of filing: 18.06.2013
(51) Int. Cl.: D01D 5/253, E04C 5/07, C04B 16/06, C04B 28/08

(54) **METHOD FOR OBTAINING FIBRES FOR USE IN FIRE RESISTANT CEMENTITIOUS BASED ARTICLES**
VERFAHREN ZUR GEWINNUNG VON FASERN ZUR VERWENDUNG IN FEUERBESTÄNDIGEN ARTIKELN AUF ZEMENTBASIS
PROCÉDÉ POUR OBTENIR DES FIBRES POUR L'UTILISATION DANS DES ARTICLES À BASE DE CIMENT RÉSISTANT AU FEU

(30) Priority: 20.06.2012 IT MI20121071
(43) Date of publication of application: 29.04.2015
(73) Proprietor: Goretti, Marco, 23821 Abadia Lariana LC (IT); Longhi, Maria Antonietta, 23821 Abbadia Lariana LC (IT)
(72) Inventor: Goretti, Marco, 23821 Abadia Lariana LC (IT); Longhi, Maria Antonietta, 23821 Abbadia Lariana LC (IT)
(74) Representative: Ripamonti, Enrico
(86) International application number: PCT/IB2013/054987
(87) International publication number: WO 2013/190460

(56) References cited:
- WO-A1-2008/035057
- US-A- 4 419 454
- US-A- 5 749 961
- US-A1- 2001 051 266
- DATABASE WPI Week 200568 Thomson Scientific, London, GB; AN 2005-660617 XP002716940, -& IT MI20 010 903 A1 (VFA SRL) 4 November 2002 (2002-11-04) cited in the application

## Description

The present invention relates to fibres in accordance with the introduction to the main claim.

In particular, the invention relates to fibres formed from polyolefins and in particular polypropylene, polyethylene and polybutylene, fibres which are to be added to the mix used for producing cementitious based articles.

With reference to the cementitious article industry, it is known that with certain such articles (for example for constructing tunnel walls or paving) the cement, concrete or mortars have to be reinforced to achieve appreciable mechanical characteristics providing protection against impacts, abrasion, load stresses, cracking and thermal stresses.

For this purpose it is known to use reinforcements of metal or metal fibres which are incorporated into the article while pouring the concrete.

The use of such reinforcements (in the form of meshes, steel bars or the like) can result in considerable costs, depending on the article or on the characteristics which it is to possess.

This affects the finished article cost.

In addition, such reinforcements give resistance to the article only in the plane in which the reinforcement acts or on each of its sides (in the case of three-dimensional reinforcements).

Moreover, the use of such reinforcements allows the water contained in the mix to evaporate rapidly, with consequent formation of capillaries therein which themselves can cause microcracks and damage.

Cementitious articles are also known in which polypropylene fibres are used, being added to the cementitious material mix to achieve higher mechanical characteristics: for example, resistance of such articles to impacts, abrasion, cracking, and also thermal stresses.

Such fibres, used as an alternative to steel reinforcements and/or fibres, are distributed fairly homogeneously, although randomly, within the article, to essentially improve its resistance in three dimensions. The result is that the article obtained in this manner is more compact and is not subjected, or at least less subjected, to the formation of cracks and their extension with time, consequently improving its impermeability.

In particular, said fibres are used as structural reinforcement for the article and are able to ensure that, when a crack forms in this latter, the article possesses a residual resistance in the sense of portability: its breakage does not take place in a sudden fragile manner but in a ductile manner, after flexing.

These fibres have various uses, such as in civil and industrial paving, prefabricated concrete elements, spray-applied concrete and cementitious mixes used to form works intended to prevent concrete explosion in the case of fire. They are also used for tunnel construction mainly to prevent explosion of the concrete in the case of fire.

WO 2008/095211 describes the use of fibres in cement, concrete, stone or similar articles, to provide greater ductility and reinforce such articles.

According to this prior patent, disc-shaped or lenticular bodies are associated with the cementitious mix, they being positioned at the centre of each fibre or bundle of fibres, wherein the disc plane lies substantially perpendicular to the longitudinal axis of the fibre or of said bundle, said body presents one or more apertures through which its associated fibre or bundle of fibres passes.

This prior patent does not confront the problem of the risks of article explosion (such as a wall or floor) in the case of fire, nor does it confront the problem of allowing escape of vapour formed in said article, such vapour being generated therein during a fire.

The fibres used in the article, which are provided with disc-shaped or lenticular bodies, do not allow any vapour to escape along them as the described fibres are not provided with channels therealong to create paths within the fibres through which such vapour can move towards a zone of escape from the article.

The purpose of this would be to prevent pressure increase in this latter and its possible explosion.

WO 2008/095211 only describes undulated fibres with longitudinal undulations or with folded terminal ends. This prior patent does not describe fibres with longitudinal channels for the escape of vapour therealong, such vapour being generated within the article in the case of fire.

US 4,033,781 describes a non-metallic fibre reinforcement to be used in articles of concrete, plaster or sand-lime mixtures. The fibres are added to the material mix for the article during its preparation. This prior patent confronts the problem of achieving a fixed bond with the matrix of said material in order to improve its flexural strength and resistance to thermal cycles, but does not cite the problem of creating a fibre by which resistance of the article to explosion during a fire is improved, neither does it describe a fibre presenting channels therealong to enable the vapour which forms in the article in the case of fire to move towards a zone from which it can escape to the outside. The fibres described in this US patent have a cross-shaped cross-section with end lobes in order to provide a ratio of surface area to cross-sectional area which is much greater than fibres of circular cross-section. Moreover, when this fibre is subjected to tension, the lobes move towards the centre of the cross-shaped fibre to increase the strength of the bond between the cement or similar matrix surfaces and the fibre itself.

KR 20090056514 describes a fibre for reinforcing a concrete article with high elongation and a high abrasion resistance.

These prior patents hence do not confront the problem of reducing, in the case of a fire, the risks of article explosion caused by the vapour which forms within said article.

Fibres if this type are described in Italian patent 1324808 to which reference should be made.

This states that these fibres are obtained by producing, by extrusion, units of the required length, consisting of a substantially flat base, from a face of which there extends at least one longitudinal rib having a cross-section of various shapes, for example isosceles trapezium or triangular shape with rounded corners. In the case of more than one rib, these are mutually equidistant, with the base presenting longitudinal weakening lines arranged to enable said unit to be separated into individual fibres, substantially all of the same shape.

These fibres are incorporated into cementitious mixes to increase the mechanical properties of the article obtained from them once set. This normally requires the addition of additives, in particular so-called superfluidifying additives.

However, with known fibres, if said mix is cast in formwork, water contained in the mix together with part of said additives migrate upwards or towards the external surface during the time following casting.

It has been found that this migration reduces the porosity of a 2-3 centimetre thick surface layer of the article obtained in this manner, this layer, in the case of fire, having to absorb the flame effect. It has been found that, because of the lower porosity, this layer can explode, hence compromising the characteristics of the article as this layer is unable to enable outward migration (because of the reduced porosity) of the pressure which is generated by the vapour generated therein by the action of the heat (which transforms the moisture normally present in the article into steam).

It is known to use fibres free of oily substances or of surface sizes which moisten the fibres; this use enables an article to be obtained which satisfies the characteristics required by regulations regarding heat resistance. It has however been noted that the addition of multifilament fibres contributes to a loss of initial compression and flexural values for the article compared with a reference concrete, especially if the proportions are high. This is because this type of multifilament fibre when used in this specific application does not require high mechanical adherence or tenacity characteristics, as their secondary action is that of minimizing plastic shrinkage, while their main action is to be able, in the case of fire, to form further escape paths or channels for the moisture present in the concrete in the form of vapour generated by the action of heat, hence avoiding the aforestated problems of fibres used with additives.

US 2001/0051266 A1 describes mechanically-flattened fibers comprising generally elongate bodies having varied width or thickness dimensions and micro-diastrophic surface deformities. Preferred fibers are elongate synthetic polymer or multipolymer blend fibers for reinforcing matrix materials such as concrete, asphalt, plastic, rubber, and other matrix materials. Preferred methods for manufacturing such fibres comprise subjecting synthetic polymer fibers to compressive forces sufficient to achieve flattening and surface micro-diastrophism without substantially shredding and abrading the fibers. Further exemplary fibers and methods involve mechanically-flattening intertwined or braided fibers or fiber bundles, thereby providing fibers having physical impressions thereon of the intertwinement or braidingand, optionally though preferably of micro-diastrophic surface deformities.

WO 2008/035057 relates to the reinforcement of materials by the dispersal of structures in the material to be reinforced. In particular the invention relates to the reinforcement of materials and involves the random dispersal of independent three-dimensional structures in the material, these structures may be a mixture of left and right handed structures and/or comprise a series of lumen to anchor them into the material and/or be selected from a subset of possible three dimensional structures based on the number of apices and connections between these.

US 5749961 describes reinforced concrete members consisting of a high-strength concrete which are subject to explosive spalling. Such spalling can be prevented by the introduction of a capillary system into the concrete of such members, containing substantially linear capillaries having a particular diameter. This capillary system can be built during or after the hardening of the concrete without impairing the other desired properties of the concrete or mortar, or it can first be produced under the fire attack. This can be effected with fibers which form the capillaries by dissolution, softening, decomposition, shrinkage or melting and which, due to their shape, i.e. diameter and length, and the incorporated amount, correspond to the desired capillaries.

US 4419454 describes that water containing refractories which inhibit or eliminate the tendency of explosive spalling are provided by mixing solid organic fibers into the refractory mix. The refractory mix may be used in castables, plastics, ramming or gunning mixes or mortars.

An object of the present invention is to provide a method for forming fibres of polypropylene or the like and to offer fibres of this type by which the aforestated drawbacks are overcome, and in particular which result in increased fire resistance of articles in which they are dispersed.

A particular object of the invention is to provide very tough fibres of irregular shape to achieve maximum adherence to the matrix while at the same time providing the article in which they are dispersed with optimal resistance to explosion in the case of fire.

Another object is to provide fibres of the stated type, possibly free of oil and miscellaneous sizes, which are able to prevent loss of initial concrete values, which are able to oppose as much as possible the formation of shrinkage cracks and fissures, and which can significantly increase the concrete values compared with a reference concrete.

A further object is to provide fibres according to the invention which enable said results to be obtained at low dosages, which have good dispersion and which satisfy the static requirements such as portability after initial cracking to hence enable an article to be obtained which remains safe after formation of initial fissures.

Another object is to provide fibres which although giving high mechanical strength to the article, are also able to reduce explosion risks in the case of fire, and which are able, in particular, to allow escape of the vapour formed within the article, of whatever type, by the steam generated during a fire.

These and other objects which will be apparent to the expert of the art are attained by a method and a fibre in accordance with the accompanying independent claims.

Other characteristics of the invention are specified in the dependent claims.

The fibres according to the invention are conveniently obtained in conventional manner by extrusion, in particular by using a die having an aperture shaped such as to obtain a fibre of the required length consisting of a substantially flat base, from a face of which there extends at least one longitudinal rib of suitable cross-sectional shape, such that in the case of a single rib, the required fibre is obtained on cooling. Several fibres can be formed by equidistant longitudinal ribs connected together by their base, longitudinal weakening lines being provided, adapted to enable the individual fibres to be mutually separated.

The present invention will be better understood from the accompanying drawings, which are provided by way of example only, and in which:
Figure 1 is a perspective view of an embodiment of the invention comprising in this specific case two fibres joined together in separable manner, the shape of these fibres being that obtained at the extrusion die exit, before gravity and drafting deform them to cause them to assume their final shape on cooling;
Figure 2 shows how the cross-section of each of the two fibres of Figure 1 is deformed after cooling and separation from the other fibre;
Figure 3 is the cross-section through a fibre variant before deformation;
Figure 4 shows how the cross-section of the fibre of Figure 3 is deformed after cooling;
Figures 5-8 show other possible fibre cross-section variants before deformation; and
Figures 9 and 10 show graphs of traction and flexural tests to which articles obtained with fibres according to the present invention were subjected.

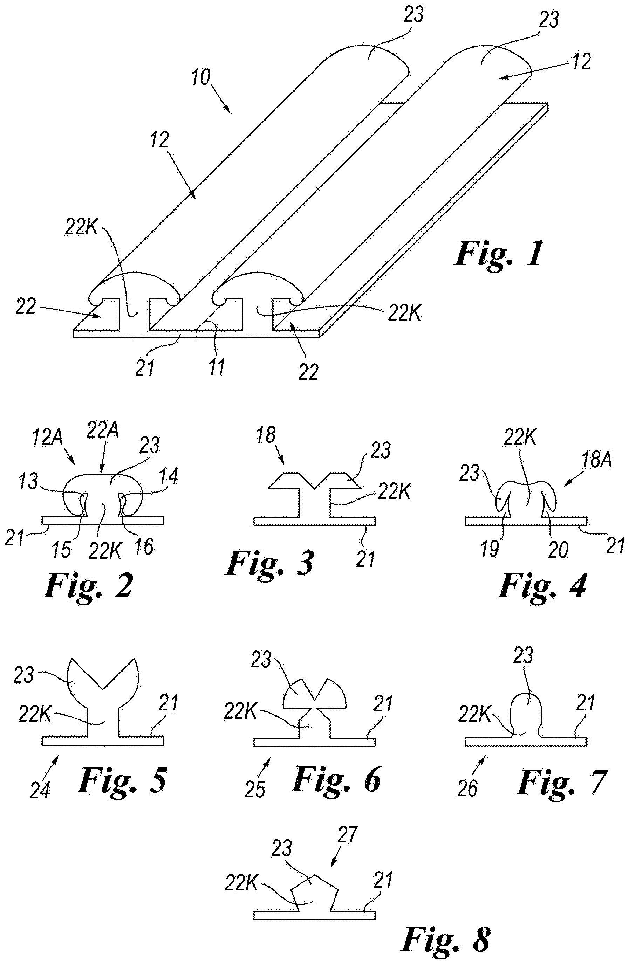

In the figures, corresponding parts are indicated by the same reference numerals. With reference to Figure 1, a group or unit 10 presenting two fibres 12 is obtained by extrusion, it being shown in this figure with the shape it possesses as it leaves the die exit; in particular the fibres 12 have not yet undergone the deformations due to gravity and to drafting which take place before cooling, hence the cross-section of the unit 10 is the same as that of the die used. The unit 10 comprises essentially two fibres 12, each consisting of a base 21 and a longitudinal rib 22 which rises from the base 21, with a widened free end 23 and a cross-section similar to a mushroom. This unit is thus defined by a plurality of fibres 12 each consisting of said base 21 and the corresponding rib 22. As described hereinafter, the fibres are arranged to be immersed in a cementitious mix both to increase the mechanical strength of this latter and to reduce explosion risks in the case of fire.

When cooling has taken place and assuming that the two fibres 12 have been separated from each other (a weakening line 11 having been provided for this purpose between adjacent fibres in the unit 10), each of the two separated fibres, which will now be indicated by 12A, will have a cross-section such as that shown in Figure 2. From this figure it can be seen that while the relative base part 21 is substantially undeformed, the rib 22 has instead undergone deformations, for which it will be indicated by 22A; in particular, during the deformation, its free end 23 has been bent or squeezed towards the base 21, such that the deformed rib 22A presents on its two sides four longitudinal channels 13, 14, 15 and 16 disposed symmetrically in pairs. In this specific case the perimeter of the cross-section of the channels 13-16 is closed (i.e. the deformed free edges of the free end 23 of the fibre 12 rest on the part 22K).

It has been found that the channels 13-16 of the fibres 12A contribute effectively, in the case of fire, to discharging to the outside of the concrete article containing the fibres 12A and obtained from said mix, the pressure due to vaporization of the moisture present in the article. Except for the particular case in which said channels discharge directly at the article surface because one of their ends opens in proximity to that surface, the remainder of the channels enable the vapour to be conveyed towards the microcracks always present in a cementitious article.

At the same time, the fibres 12A obtained according to the invention and provided with said channels are able to effectively bind to the cementitious mix to hence strengthen it mechanically.

It should be noted that the unit 10 can be formed from any number of mutually separable side-by-side fibres, or from a single fibre.

Figure 3 shows the shape of the cross-section of a second fibre example, indicated by 18, as it leaves the extruder, while Figure 4 shows the cross-section of the same fibre of Figure 3 once cooled and deformed, here indicated by 18A. From Figure 4 it can be seen that the fibre 18A also presents two longitudinal channels 19 and 20 disposed symmetrically, the cross-section of which has however an open perimeter. However, the longitudinal opening of the channels 19 and 20 has a width (for example from a few hundredths to a few tenths of a millimetre such as to prevent entry into the relative channel 19, 20 through this opening, of the constituent solid materials of the cementitious mix to which the fibres 18A have been added, said channels 19 and 20 hence performing the same function as the channels 13-16 of the fibre 12A.

As already stated, Figures 5-8 show the undeformed cross-sections of other fibres, 24, 25, 26 and 27 respectively, which after cooling and deformation give rise to corresponding fibres having the required longitudinal discharge channels.

For simplicity the relative deformed cross-sections after cooling have not been shown, however they then present the aforesaid channels obtained by deforming the free end 23 of the rib 22 towards the underlying part which supports it and which joins it to the base 21, this part being indicated by 22K.

As can be seen, at these ends 23, undercuts or recesses (towards the end) are present in the sides of the part 22K to act as a facilitation for the deformation of said end 23 towards the base 21.

Preferably the fibres used have a tenacity not less than 4.2 grams/denier, preferably between 5.8 and 18 grams/denier and advantageously between 9 and 12 grams/denier.

The fibres were tested in different applications; even if what follows must not be considered limiting the scope of this invention, those applications which were most influenced positively were those relating to the formation of floor screeds, mortars and thixotropic mortars, providing a valid control both of plastic shrinkage and of the mechanical and physical performance of the finished product.

In practical embodiments, the fibre of Figures 1 and 2 can be classified as macrofibre as it has an equivalent diameter greater than 0.30 mm and presents a recess in the upper part with an angle of 90º, an angle variable in percentage terms of ±89%, advantageously between ±70%. It is polymer-based and has a minimum diameter equivalent to 0.31 mm, diameter variable within a percentage range of +500%, advantageously within +250%. The fibre has a minimum count of 621.6395625 expressed in Denier, this count variable within a percentage range of +500%, advantageously within +350% per single filament. Its tenacity is between 5.2 gram/denier and 18 gram/denier, preferably 11 gram/denier, tenacity variable within a percentage range of ±40%. By way of example, the breaking strength measured on a series of yarns having a diameter of about 0.46 mm was 74 N, variable within a percentage range of-34.6% to +60%, the tensile strength measured is 377 N/mm², variable within a percentage range of -2.2% to +70%, the measured breaking elongation being 49.8%, variable within a percentage range of +15 to -95%, the fibre E-modulus being calculable on the expressed values and convertible into GPa.

The fibre type classifiable as microfibre on the basis of its diameter alone, i.e. with an equivalent diameter less than 0.30 mm, is used both in industrial paving and in mortars, and for cementitious articles produced for the prevention of concrete or mortar explosion in tunnels. The fibre leaves the extruder with a predetermined shape and is positioned on a cooling cylinder; the contact action cools the molten material which undergoes deformation to present lateral protuberances on the main body of the structure (for example as in Figure 2).

Cooling and initial drafting cause the fibre to further deform such that it is squeezed onto itself, however the relevant parts remain open by subsequent drafting action to finally create and maintain venting microchannels 13, 14, 15 and 16. In this manner a fibre is formed with a geometrical pattern such as to obtain and maintain during all production steps at least one and preferably two escape channels for the vapours generated by the temperature during a fire, even before the formation of venting channels in the article generated firstly by fusion and then by combustion of the fibre, which occurs at around 570ºC. This prevents increase in pressure of the vapour in its interior, by facilitating the escape of a large part of the vapour through the microcracks present in the article without awaiting formation of the venting channels which form after fibre combustion, hence reducing the "explosion" effect of the article due to the vapour pressure. In all cases the voids created in the fibre cross-section are between 3% and 30% of the fibre cross-section, preferably between 7% and 15% of the fibre cross-section.

By way of non-limiting example, for a fibre body having a theoretical denier count between 1.4 denier and 599 denier, advantageously a fibre filament of 127.327 denier, with a count variable between -98.630% and +113%, preferably between 12 and 40 denier per single filament, having an equivalent diameter of 0.1403 mm (diameter variable within a percentage range of -98.630% to +113%), the tenacity is between 4.2 gram/denier and 18 gram/denier. Preferably, by way of non-limiting example, this tenacity is equal to 9 gram/denier with breaking strength variable from -10% to +80%. Again by way of non-limiting example, a filament having a theoretical count of 22.395 filament denier, equal to an equivalent diameter of a yarn of about 0.0588 mm, has an average single filament breaking tenacity of 201.555 gram, variable up to +80% while, by way of non-limiting example, the average measured tensile strength of a single end is equal to 727.06815 N/mm², within a percentage variable up to +80%.

It should be noted that the deformed fibre has the property of stronger binding to the article of cementitious material, hence increasing its average tensile strength.

In a further practical example, the fibre shown in Figure 7 is a microfibre. This fibre can act at the structural level without creating that series of drawbacks and costs which arise when using steel meshes and fibres, hence solving the problems arising in the use of steel reinforcements in terms of production and laying costs, and the problems of steel fibres and macrofibres related to their difficult workability. By way of non-limiting example, for a fibre body having a theoretical denier count between 1.4 denier and 599 denier, advantageously a fibre filament of 127.327 denier, with a count variable between -98.630% and +113%, preferably between 12 and 40 denier per single filament, having an equivalent diameter of 0.1403 mm (diameter variable within a percentage range of -98.630% to +113%), the tenacity is between 4.2 gram/denier and 18 gram/denier, preferably by way of non-limiting example 9 gram/denier. For example, a single filament, having a theoretical count of 22.9166 filament denier, equal to an equivalent yarn diameter of about 0.0595 mm, has an average breaking tenacity of 208.139 gram variable up to +80%, while, by way of non-limiting example, the average measured tensile strength of a single end is equal to 680.12 N/mm², within a percentage variable up to +80%.

The invention can be applied in many concrete products, such as industrial pavings, mortars or tunnel mortars, prefabricated articles and/or concrete resistant to explosion due to the action of fire and intended for works in tunnels where metal mesh and/or steel fibre reinforcement is currently used. This is achieved by virtue of polymer macro and micro fibres of irregular variable geometry, high tenacity and high adherence to the matrix. By adding these yarns and filaments, effective intervention can be achieved in various sectors and applications. The use of these filaments, based on the amounts added to concretes, has enabled high CMOD values to be achieved such as to easily fall within class T3 and beyond G3 of the Eurocode 2 classification, in terms of its utilization, of its suitability for use, and of its portability.

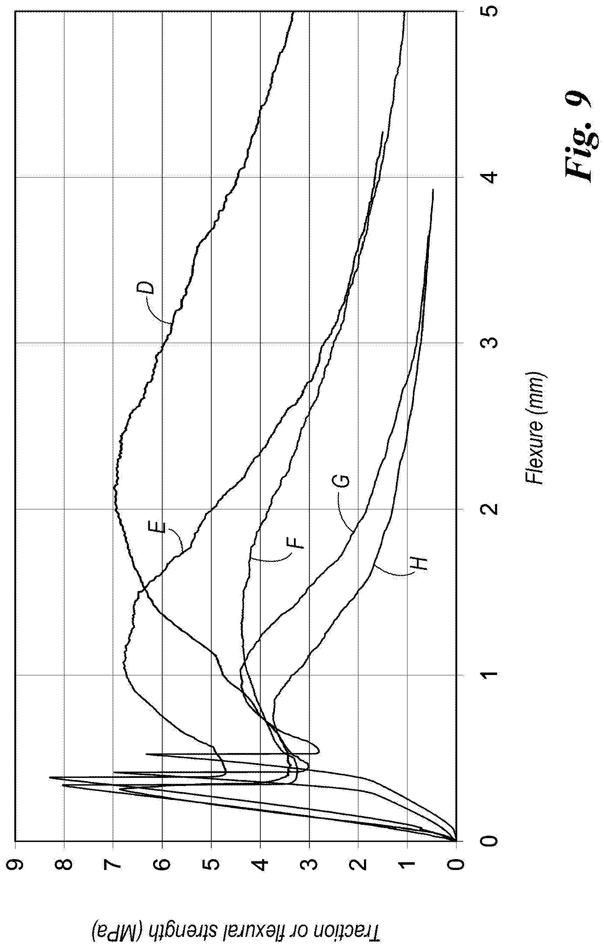

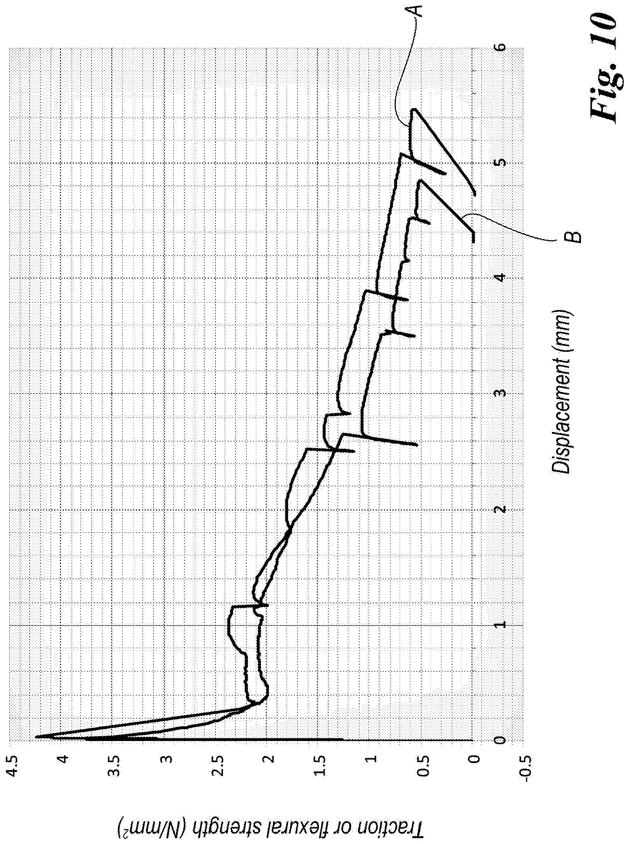

Figures 9 and 10 show graphs of tests to which articles with different proportions of fibres according to the invention were subjected, compared with articles without such fibres.

In particular, Figure 10 shows a graph of flexural strength vs. displacement with two different curves (A, B) corresponding to articles (concrete prisms) obtained with different percentages of fibres according to the invention. The curves A, B relate to articles obtained with a quantity respectively of 5 and 7 kg of fibres with an equivalent diameter of 20 mm.

Figure 9 shows the analysis of flexural tests under traction on small prisms (with fibre proportion of 10 kg/m³ and concrete of 510 kg/m³. This figure shows various curves (D, E, F, G, H) corresponding test pieces of different cross-section.

As can be seen, articles D and E show excellent deformation resistance even at high loads, while the remaining curves show resistances which are in any event much greater than those obtainable with articles without the fibres according to the invention.

## Claims

1. A method for producing polyolefin material fibres (12) to be added to a mix used to form a cementitious based article, said fibres (12) being adapted to prevent explosion of said article in the case of fire, i.e. if subjected to heat generated by a fire, the fibres (12) being adapted to enable escape, from the article, of vapour formed in this latter during the fire, each fibre (12) being obtained by extrusion, the fibre (12) being subjected to deformation such as to longitudinally create therealong longitudinal channels (13, 14, 15, 16: 19, 20), **characterised in that** each fibre presents, at the extruder exit, a base (21) and a longitudinal rib (22) rising from said base (21) and having a widened free end (23) positioned at the end of a part (22K) which supports it and joins it to said base (21), the deformation of the fiber forming a geometrical pattern such as to obtain at least one escape channel for the vapour generated in the cementitious based article by a fire and enabling the aforestated vapour to move or to escape to the outside of the article.

2. A method as claimed in claim 1, **characterised in that** each fibre deforms by gravity and by drafting after extrusion.

3. A method as claimed in claim 1, **characterised in that** the deformation causes the widened free end (23) of the fibres to undergo squeezing towards the base (21) such as to form at least two channels (13, 14, 15, 16: 19, 20) on the sides of that part (22K) of the rib (22) which supports said free end (23).

4. A method as claimed in claim 3, **characterised in that** the deformation of the fibre (12) generates at least one longitudinal channel (13, 14, 15, 16: 19, 20) on each side of that part (22K) of the rib (22) which supports the free end of this latter.

5. A method as claimed in claim 1, **characterised by** forming, by extrusion, a unit (10) comprising a plurality of fibres (12) connected together via their bases (21), between these latter there being provided a weakening line (11) for the separation of two adjacent fibres (12).

6. A method as claimed in claim 1, **characterised in that** each longitudinal channel (13, 14, 15, 16: 19, 20) has a closed perimeter.

7. A method as claimed in claim 1, **characterised in that** each longitudinal channel has an open perimeter.

8. A method as claimed in claim 1, **characterised in that** the longitudinal channels (13, 14, 15, 16: 19, 20) are arranged symmetrically along the fibre (12).

9. A method as claimed in claim 1, **characterised in that**, by virtue of the extrusion, the fibre (12) is obtained with longitudinal undercuts which act as a facilitation for the actual fibre deformation leading to the subsequent formation of the channels (13, 14, 15, 16: 19, 20).

10. A method as claimed in claim 2, **characterised in that** after extrusion, the fibre is cooled by its contact with a cooling roller at the extruder exit, said contact deforming the fibre (12) such that its widened free end (23) is squeezed towards the base (21) to form lateral protuberances which define the longitudinal channels (13, 14, 15, 16: 19, 20), said squeezing being followed by an initial drafting of the fibre, a subsequent drafting of this latter finally forming and maintaining said channels for vapour escape.

11. A fibre of polyolefin material such as polypropylene, polyethylene or polybutylene, intended be added to a mix used to produce cementitious based articles, said fibre being obtained by extruding and deforming it in accordance with claim 1 and being adapted to facilitate venting of vapour from the article interior to the outside if said article is subjected to a fire, the fibre comprising a base (21) from which a longitudinal rib (22) rises, this latter comprising a widened free end (23) positioned at the end of a part (22K) which supports it and joins it to said base, **characterised by** presenting at least one longitudinal channel (13, 14, 15, 16: 19, 20) on each side of that part (22K) which supports the widened free end (23), said fibre being connected to at least one other identical fibre (12) via their bases (21), longitudinal predetermined separation lines (11) being provided which enable the individual fibres to be mutually separated.

12. A fibre as claimed in claim 11, **characterised in that** said longitudinal channel (13, 14, 15, 16: 19, 20) presents either an open perimeter or a closed perimeter.

13. A fibre as claimed in claim 11, **characterised by** presenting a tenacity not less than 4.2 grams/denier, preferably between 5.8 and 18 grams/denier, advantageously between 9 and 12 grams/denier.

## Patentansprüche

1. Verfahren zur Herstellung von Fasern (12) aus Polyolefinen zum Zusatz einer zur Bildung eines Artikels auf Zementbasis benutzten Mischung, wobei die genannten Fasern (12) geeignet sind, die Explosion des genannten Artikels im Brandfall, das heißt, wenn es der von einem Feuer erzeugten Wärme ausgesetzt ist, zu vermeiden, wobei die Fasern (12) geeignet sind, den in dem Artikel bei Feuer gebildeten Dampf daraus ausströmen zu lassen, wobei jede Faser (12) durch Extrusion erhalten wird, wobei die Faser (12) derart verformt wird, dass längsverlaufende Kanäle (13, 14, 15, 16, 19, 20) in der Länge davon erzeugt werden, **dadurch gekennzeichnet, dass** jede Faser am Ausgang des Extruders einen Sockel (21) und eine längsverlaufende Rippe (22) aufweist, wobei die Rippe sich aus dem genannten Sockel (21) erhebt und ein erweitertes freies Ende (23) am Ende einer es stützenden und mit dem genannten Sockel (21) verbindenden Portion (22K) hat, wobei die Verformung der Faser eine derartige geometrische Struktur bildet, dass mindestens ein Ausflusskanal für den in dem Artikel auf Zementbasis durch einen Feuer erzeugten Dampf erzielt ist und der genannte Dampf außerhalb des Artikels bewegen oder ausströmen kann.

2. Verfahren nach Anspruch 1, **dadurch gekennzeichnet, dass** jede Faser durch Schwerkraft und durch Ziehen nach der Extrusion.

3. Verfahren nach Anspruch 1, **dadurch gekennzeichnet, dass** das erweiterte freie Ende (23) der Fasern wegen der Verformung gegen den Sockel (21) gedrückt wird, so dass es mindestens zwei Kanäle (13, 14, 15, 16, 19, 20) an den Seiten der das genannte freie Ende (23) stützenden Portion (22K) der Rippe (22) bildet.

4. Verfahren nach Anspruch 3, **dadurch gekennzeichnet, dass** die Verformung der Faser (12) mindestens einen längsverlaufenden Kanal (13, 14, 15, 16, 19, 20) an den beiden Seiten der das genannte freie Ende (23) stützenden Portion (22K) der Rippe (22) erzeugt.

5. Verfahren nach Anspruch 1, **dadurch gekennzeichnet, dass** es durch Extrusion eine Einheit (10) bildet, die eine Vielzahl von durch ihre Sockel miteinander verbundenen Fasern umfasst, wobei eine schwächende Linie (11) zur Trennung von zwei benachbarten Fasern (12) zwischen denselben vorhanden ist.

6. Verfahren nach Anspruch 1, **dadurch gekennzeichnet, dass** jeder längsverlaufende Kanal (13, 14, 15, 16, 19, 20) einen geschlossenen Umfang hat.

7. Verfahren nach Anspruch 1, **dadurch gekennzeichnet, dass** jeder längsverlaufende Kanal einen offenen Umfang hat.

8. Verfahren nach Anspruch 1, **dadurch gekennzeichnet, dass** die längsverlaufenden Kanäle (13, 14, 15, 16, 19, 20) der Faser (12) entlang symmetrisch angeordnet sind.

9. Verfahren nach Anspruch 1, **dadurch gekennzeichnet, dass**, aufgrund der Extrusion, die Faser (12) mit längsverlaufenden Hinterschneidungen erzeugt wird, die die tatsächliche, die folgende Bildung der Kanäle (13, 14, 15, 16, 19, 20) verursachende Verformung der Faser erleichtern.

10. Verfahren nach Anspruch 2, **dadurch gekennzeichnet, dass**, nach der Extrusion, die Faser gekühlt wird, indem sie mit einer Kühlwalze am Ausgang des Extruders in Berührung kommt, wobei die genannte Berührung die Faser (12) derart verformt, dass das entsprechende erweiterte freie Ende (23) gegen den Sockel (21) gedrückt wird, um seitliche, die längsverlaufenden Kanäle (13, 14, 15, 16, 19, 20) bestimmende Vorsprünge zu bilden, wobei der genannte Druck durch eine anfängliche Ziehung der Faser gefolgt ist, wobei eine nachfolgende Ziehung davon die genannten Kanäle zur Ausströmung des Dampfs schließlich bildet und aufrechterhält.

11. Faser aus Polyolefinen, wie zum Beispiel Polypropylene, Polyethylene oder Polybutylene, zum Zusatz einer zur Herstellung von Artikeln auf Zementbasis benutzten Mischung, wobei die genannte Faser durch Extrusion und Verformung nach Anspruch 1 erzielt ist und geeignet ist, die Entlüftung des Dampfs von der Innenseite des Artikels bis zur Außenseite davon zu erleichtern, wenn der genannte Artikel einem Feuer ausgesetzt ist, wobei die Faser einen Sockel (21) umfasst, aus dem sich eine längsverlaufende Rippe (22) erhebt, wobei diese Rippe ein erweitertes freies Ende (23) am Ende einer es stützenden und mit dem genannten Sockel (21) verbindenden Portion (22K) hat, **dadurch gekennzeichnet, dass** sie mindestens einen längsverlaufende Kanal (13, 14, 15, 16, 19, 20) an den beiden Seiten der das erweiterte freie Ende (23) stützenden Portion (22K) aufweist, wobei die genannte Faser mit mindestens einer weiteren identischen Faser (12) durch die entsprechenden Sockel (21) verbunden ist, wobei vorgegebene längsverlaufende Trennungslinien (11) vorhanden sind, die die Trennung der einzelnen Fasern voneinander ermöglichen.

12. Faser nach Anspruch 11, **dadurch gekennzeichnet, dass** die genannte längsverlaufende Kanal (13, 14, 15, 16, 19, 20) entweder einen offenen Umfang oder einen geschlossenen Umfang hat.

13. Faser nach Anspruch 11, **dadurch gekennzeichnet, dass** sie eine Zugfestigkeit von mindestens 4,2 Gramm/Denier, vorzugsweise zwischen 5,8 und 18 Gramm/Denier, vorteilhaft zwischen 9 und 12 Gramm/Denier hat.

## Revendications

1. Procédé pour produire des fibres de matériau en polyoléfine (12), destinées à être ajoutées à un mélange utilisé pour former un article à base de ciment, lesdites fibres (12) étant adaptées à empêcher une explosion dudit article dans le cas d'un feu, c'est-à-dire que, si elles sont soumises à une chaleur générée par un feu, les fibres (12) étant adaptées à permettre l'échappement, à partir de l'article, d'une vapeur formée dans ce dernier pendant le feu, chaque fibre (12) étant obtenue par extrusion, la fibre (12) étant soumise à une déformation de façon à créer longitudinalement le long de celle-ci des canaux longitudinaux (13, 14, 15, 16, 19, 20), **caractérisé en ce que** chaque fibre présente, à la sortie de l'extrudeuse, une base (21) et une nervure longitudinale (22) s'élevant de ladite base (21) et ayant une extrémité libre élargie (23) positionnée à la fin d'une partie (22K) qui la soutient et la relie à ladite base (21), la déformation de la fibre formant un motif géométrique de façon à obtenir au moins un canal d'échappement pour la vapeur générée dans l'article à base de ciment par le feu, permettant à ladite vapeur de se déplacer ou d'échapper à l'extérieur de l'article.

2. Procédé selon la revendication 1, **caractérisé en ce que** chaque fibre se déforme sous l'effet de la gravité et de l'étirage après l'extrusion.

3. Procédé selon la revendication 1, **caractérisé en ce que** l'extrémité libre élargie (23) des fibres est pressée à cause de la déformation vers la base (21), de façon à former au moins deux canaux (13, 14, 15, 16, 19, 20) sur les côtés de la partie (22K) de la nervure (22) qui soutient ladite extrémité libre (23).

4. Procédé selon la revendication 3, **caractérisé en ce que** la déformation de la fibre (12) génère au moins un canal longitudinal (13, 14, 15, 16, 19, 20) sur chaque côté de la partie (22K) de la nervure (22) qui soutient l'extrémité libre de cette dernière.

5. Procédé selon la revendication 1, **caractérisé en ce qu'**il forme, par extrusion, une unité (10) comprenant une pluralité de fibres (12) reliées l'une à l'autre moyennant leurs bases (21), une ligne d'affaiblissement (11) étant prévue entre elles pour séparer deux fibres (12) adjacentes.

6. Procédé selon la revendication 1, **caractérisé en ce que** chaque canal longitudinal (13, 14, 15, 16, 19, 20) a un périmètre fermé.

7. Procédé selon la revendication 1, **caractérisé en ce que** chaque canal longitudinal a un périmètre ouvert.

8. Procédé selon la revendication 1, **caractérisé en ce que** les canaux longitudinaux (13, 14, 15, 16, 19, 20) sont agencés symétriquement le long de la fibre (12).

9. Procédé selon la revendication 1, **caractérisé en ce que**, en vertu de l'extrusion, la fibre (12) est obtenue avec des encoches longitudinales qui servent à favoriser la déformation effective des fibres qui entraîne la formation ultérieure de canaux (13, 14, 15, 16, 19, 20).

10. Procédé selon la revendication 2, **caractérisé en ce que**, suite à l'extrusion, la fibre est refroidie par son contact avec un rouleau de refroidissement à la sortie de l'extrudeuse, ledit contact déformant la fibre (12) de sorte que son extrémité libre élargie (23) est pressée vers la base (21), formant des saillies latérales qui définissent les canaux longitudinaux (13, 14, 15, 16, 19, 20), ladite pression étant suivie par un étirage initial de la fibre, l'ultérieur étirage de celle-ci formant enfin et maintenant lesdits canaux pour l'échappement de la vapeur.

11. Fibre de matériau en polyoléfine, tel que polypropylène, polyéthylène ou polybutylène, destinée à être ajoutée à un mélange utilisé pour produire des articles à base de ciment, ladite fibre étant obtenue par extrusion et déformation selon la revendication 1 et étant adaptée pour favoriser l'échappement de vapeur de l'intérieur de l'article à l'extérieur, si ledit article est soumis à feu, la fibre comprenant une base (21) de laquelle s'élève une nervure longitudinale (22), cette dernière comprenant une extrémité libre élargie (23) positionnée à la fin d'une partie (22K) qui la soutient et la relie à ladite base, **caractérisée en ce qu'**elle présente au moins un canal longitudinal (13, 14, 15, 16, 19, 20) sur chaque côté de cette partie (22K) qui soutient l'extrémité libre élargie (23), ladite fibre étant reliée au moins à une autre fibre (12) identique moyennant leurs bases (21), des lignes de séparation (11) longitudinales prédéterminées étant prévues pour permettre de séparer les fibres individuelles l'une de l'autre.

12. Fibre selon la revendication 11, **caractérisée en ce que** ledit canal longitudinal (13, 14, 15, 16, 19, 20) présente un périmètre ouvert ou un périmètre fermé.

13. Fibre selon la revendication 11, **caractérisée en ce qu'**elle présente une ténacité qui n'est pas inférieure à 4,2 grammes par denier, qui est préférablement comprise entre 5,8 et 18 grammes par denier, qui est avantageusement comprise entre 9 et 12 grammes par denier.
